# EUROPEAN PATENT APPLICATION

(11) **EP 4 742 406 A1**
(43) Date of publication of application: **13.05.2026**
(21) Application number: 25816202.3
(22) Date of filing: 07.05.2025
(51) Int. Cl.: H01M 50/383, H01M 50/367, H01M 50/249

(54) **BATTERY PACK AND VEHICLE COMPRISING BATTERY PACK**

(30) Priority: 28.05.2024 KR 20240069296
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: Plasseraud IP
(86) International application number: PCT/KR2025/006115
(87) International publication number: WO 2025/249788

(57) **Abstract**

A battery pack according to an embodiment of the present disclosure may include a plurality of battery cells; and a pack case formed of a plurality of frames and configured to store the plurality of battery cells in its inner space, wherein the pack case may include a venting unit configured to discharge venting gas generated from the battery cell to the outside, and a trap portion protruding inward from the venting unit and configured to suppress sparks included in the venting gas from moving to the venting unit.

## Description

### TECHNICAL FIELD

The present disclosure relates to a battery pack and a vehicle including the same.

This application is based on and claims priority from Korean Patent Application No. 10-2024-0069296, filed on May 28, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell, that is, the unit battery cell, is approximately 2.5V to 4.5V. When high output voltage is required, multiple battery cells may be connected in series to form a battery pack. In addition, multiple battery cells may be connected in parallel to configure a battery pack depending on charge/discharge capacity required for the battery pack. Accordingly, the number of battery cells included in the battery pack may be set in various ways depending on the required output voltage or charge/discharge capacity.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of being modularized, have been manufactured.

If a thermal event such as thermal runaway occurs inside the battery pack, gas may be emitted from the battery cells included inside the battery pack, and this gas may include flames or the like.

In the case of conventional battery packs, when an abnormal situation occurs in a specific battery cell or battery module, high-temperature gas or the like is often discharged to the outside of the pack case through a venting unit provided in the pack case.

In addition, when gas is generally emitted from the battery cell, electrode plate particles or active material particles heated to a high temperature may be discharged from the battery cell to the outside, and these high-temperature particles may appear in the form of sparks.

At this time, if the sparks are exposed to the outside of the pack case together with the gas through the venting unit, they may react with oxygen outside the battery pack, causing a flame or fire outside the battery pack. Furthermore, if a flame or fire occurs outside a specific battery pack, the fire or the like may spread to other adjacent battery packs or a device equipped with the battery pack, causing a bigger problem.

Therefore, a technology is required to prevent sparks or flames from being exposed to the outside of the battery pack through the venting unit, thereby suppressing the occurrence or spread of flames or fires outside the battery pack.

### DISCLOSURE

### Technical Problem

The present disclosure is designed to solve the problems of the related art, and therefore the present disclosure is directed to providing a battery pack capable of ensuring safety and reliability in the event of an abnormality in a battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case formed of a plurality of frames and configured to store the plurality of battery cells in its inner space, wherein the pack case may include a venting unit configured to discharge venting gas generated from the battery cell to the outside, and a trap portion protruding inward from the venting unit and configured to suppress sparks included in the venting gas from moving to the venting unit.

The venting unit may have a venting path formed inside one or more of the plurality of frames and configured such that the venting gas flows therethrough.

The venting unit may have an inlet hole configured to communicate the inner space of the pack case with the venting path, and an outlet hole configured to discharge venting gas flowing into the venting path through the inlet hole to the outside of the pack case.

The inlet hole and the outlet hole may be provided at positions that are staggered in a direction from the inside to the outside of the pack case.

The pack case may include a base frame on which the plurality of battery cells are seated, and a side frame extending upward from the base frame and having the venting unit provided therein.

The inlet hole may be provided on an inner surface of the side frame, and the outlet hole may be provided on an outer surface of the side frame, and the outlet hole may be configured to be spaced apart from the inlet hole in an extension direction of the side frame.

The venting unit may include a guide member provided inside the venting path and configured to guide the venting gas to the outlet hole.

The trap portion may be provided to the side of the inlet hole.

The trap portion may include a first cover configured to protrude from the perimeter of the inlet hole toward the inner space.

The first cover may be provided on at least one of upper, left, and right sides of the inlet hole.

The trap portion may include a second cover extending from the first cover and being bent to face the pack case.

The second cover may include a side cover provided at the left and right sides of the inlet hole.

The second cover may include an upper cover provided at the upper side of the inlet hole.

The battery pack may further include a module case configured to store the plurality of battery cells in a storage space and having a venting hole formed on an upper side to communicate with the storage space.

In another aspect of the present disclosure, there is provided a vehicle including a battery pack according to the present disclosure.

### Advantageous Effects

According to an aspect of the present disclosure, it is possible to ensure safety and reliability by preventing sparks generated in an abnormal situation of a battery cell from being exposed to the outside of the pack case.

Furthermore, according to an aspect of the present disclosure, the performance of preventing thermal propagation between packs can be effectively secured by suppressing flame development outside the battery pack.

In addition, according to an aspect of the present disclosure, when a specific battery cell or battery module is in an abnormal situation inside a battery pack, high-temperature gas generated from the battery cell can be smoothly discharged to the outside of the pack case. Therefore, it is possible to prevent other battery cells or battery modules from being thermally damaged, thereby preventing further chain ignition.

In addition, according to an aspect of the present disclosure, the discharge path and time of high-temperature venting gas or flame can be increased. In particular, the strong tendency of flames or sparks to move straight can be reduced, thereby further suppressing their exposure to the outside of the pack case.

Accordingly, according to an aspect of the present disclosure, it is possible to prevent or delay events such as fire or explosion due to thermal runaway of a battery pack including multiple battery modules or a device equipped with them.

In particular, in the case of an electric vehicle, by suppressing or delaying the propagation of thermal runaway between the battery cells or battery modules, sufficient time can be secured for the occupants to escape or drive.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is an exploded perspective view of a battery module included in a battery pack according to an embodiment of the present disclosure.
FIG. 4 is an enlarged view of an internal configuration of a battery pack according to an embodiment of the present disclosure, which may be a drawing illustrating, for example, part A in FIG. 2.
FIG. 5 is an enlarged view of an outer configuration of a battery pack according to an embodiment of the present disclosure, which may be a drawing illustrating, for example, part B in FIG. 2.
FIG. 6 is a cross-sectional view of a battery pack when viewed from above according to an embodiment of the present disclosure, which may be a cross-sectional view taken, for example, along line I - I' in FIG. 1.
FIG. 7 is a drawing illustrating a guide member included in a battery pack according to an embodiment of the present disclosure.
FIG. 8 is a drawing illustrating a guide member included in a battery pack according to another embodiment of the present disclosure.
FIG. 9 is a drawing illustrating a guide member included in a battery pack according to another embodiment of the present disclosure.
FIG. 10 is a drawing illustrating a structure of a trap portion of a battery pack according to an embodiment of the present disclosure.
FIG. 11 is a cross-sectional view of a battery pack when viewed from above according to an embodiment of the present disclosure.
FIG. 12 is a cross-sectional view of a battery pack when viewed from the side according to an embodiment of the present disclosure.
FIG. 13 is a cross-sectional view of a battery pack according to an embodiment of the present disclosure, which may be a cross-sectional view taken, for example, along line II - II' in FIG. 1.
FIG. 14 is a drawing illustrating a structure of a trap portion of a battery pack according to another embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

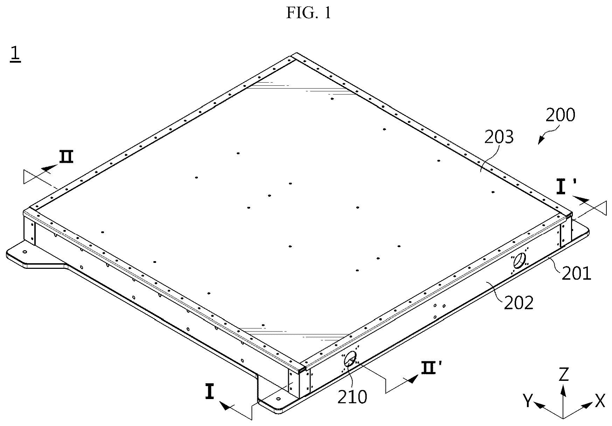

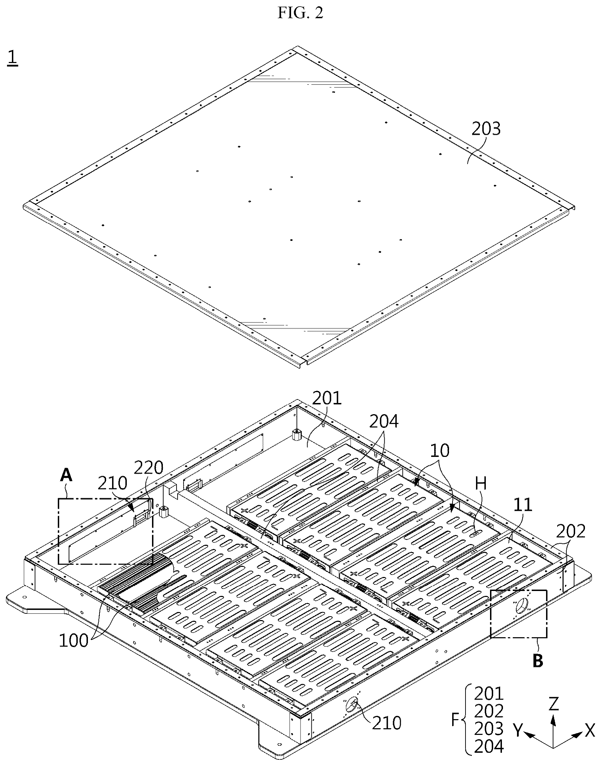

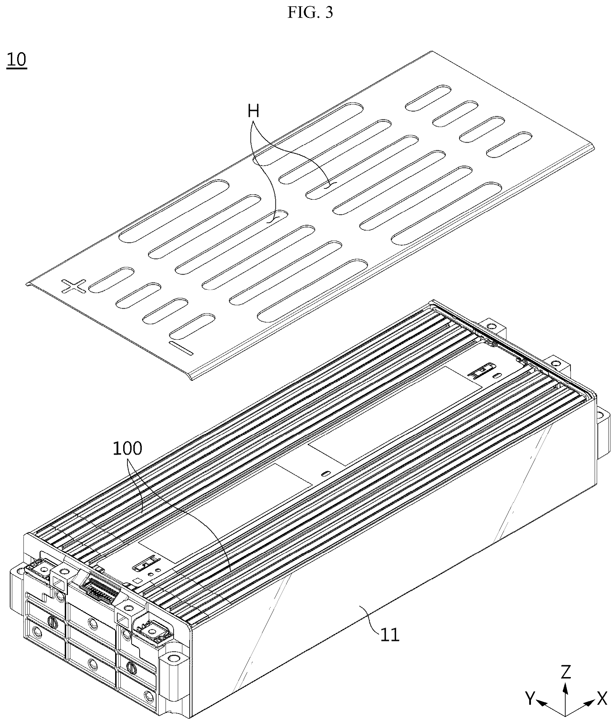

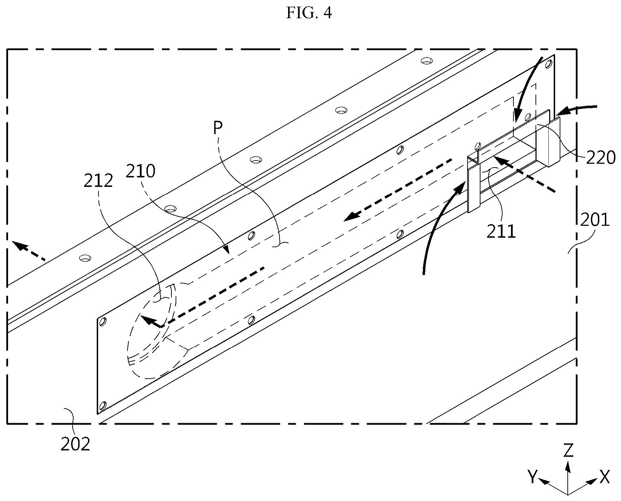

FIG. 1 is an overall perspective view of a battery pack according to an embodiment of the present disclosure, FIG. 2 is an exploded perspective view of a battery pack according to an embodiment of the present disclosure, and FIG. 3 is an exploded perspective view of a battery module included in a battery pack according to an embodiment of the present disclosure. In addition, FIG. 4 is an enlarged view of an internal configuration of a battery pack according to an embodiment of the present disclosure, which may be a drawing illustrating, for example, part A in FIG. 2.

Referring to FIGS. 1 to 4, a battery pack 1 according to an embodiment of the present disclosure includes a battery cell 100 and a pack case 200.

First, referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends outward from the cell case to function as an electrode terminal. In this case, the plurality of battery cells 100 may be electrically connected to each other.

The battery cell 100 may be a pouch-type secondary battery. A cell case of such a pouch-type secondary battery may be configured in the form of a pouch in which a metal layer made of aluminum is interposed between polymer layers.

The plurality of battery cells 100 may be arranged in parallel along the front-back direction (Y-axis direction) while standing in the vertical direction (Z-axis direction). In this case, each battery cell 100 may be provided such that sealing portions face in the left-right direction (X-axis direction) and the upward direction (+Z-axis direction), and such that a receiving portion faces in front-back direction (Y-axis direction).

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to store a plurality of battery cells 100. Specifically, the pack case 200 may be formed by a plurality of frames F. That is, the pack case 200 may have an exterior formed by a plurality of frames F. For example, the pack case 200 may be comprised of six frames F configured in a cuboid shape. The pack case 200 may provide an inner space such that a plurality of battery cells 100 may be stored therein.

The pack case 200 may be made of a material capable of securing mechanical strength, such as a metal, for example, steel or SUS, or a plastic, or may include such a material in order to safely protect the battery cells 100 stored therein.

In addition, the pack case 200 may include a venting unit 210. The venting unit 210 may be configured to discharge gas generated from the battery cells 100 stored therein to the outside of the pack case 200. The venting unit 210 may be configured to communicate the inner space and the outer space of the pack case 200 with each other. The venting unit 210 may be provided in at least one of the plurality of frames F of the pack case 200.

Furthermore, the pack case 200 may have a trap portion 220. The trap portion 220 may be configured to suppress sparks included in the venting gas from moving to the venting unit 210. The trap portion 220 may be configured to allow the venting gas to move to the venting unit 210 while blocking the sparks. According to an embodiment of the present disclosure, the trap portion 220 may be configured to completely block the sparks from passing through the trap portion 220.

Specifically, the trap portion 220 may be provided in the venting unit 210. The trap portion 220 may be provided in the frame of the pack case 200 where the venting unit 210 is provided. The trap portion 220 may be provided on the inner surface of the frame of the pack case 200, particularly on the inner side of the venting unit 210. For example, as disclosed in the embodiment illustrated in FIG. 4, the trap portion 220 may be configured to protrude inward from the venting unit 210. According to the above-implemented configuration of the present disclosure, sparks emitted from the battery cell 100 may be preemptively blocked before reaching the venting unit 210 of the pack case 200.

The trap portion 220 may be made of a material including a material having low thermal conductivity and excellent heat resistance and/or fire resistance. For example, the trap portion 220 may be made of a flame-retardant mica material. Alternatively, the trap portion 220 may be made of a metal material having rigidity and heat resistance.

Sparks or flame with a strong tendency to move straight may be discharged from the battery cell 100, and may collide with the internal structure of the pack case 200 and move to the venting unit 210. However, according to the above-implemented configuration of the present disclosure, the venting gas may have its flow direction to be bent by the trap portion 220 before being discharged to the venting unit 210. In addition, during this process, sparks or the like heading toward the venting unit 210 together with the venting gas may be suppressed from being discharged to the outside by the trap portion 220 (see the bold arrows in FIG. 4).

Accordingly, it is possible to suppress the sparks from reacting with oxygen outside the pack case 200 and causing a flame. Therefore, according to the above-described aspect of the present disclosure, the safety and reliability of the battery pack 1 may be ensured.

In addition, according to an embodiment of the present disclosure, sparks generated in a battery cell 100 may be blocked by the trap portion 220, and at the same time, the venting gas may be smoothly discharged through an exposed portion of the venting unit 210 (see the dotted arrows in FIG. 4). Accordingly, when an abnormal situation occurs in a battery cell 100, the venting gas may be quickly discharged to the outside of the pack case 200 through the venting unit 210, thereby preventing an increase in the internal pressure of the pack case 200, and preventing further chain ignition of other battery cells 100.

Referring to FIG. 2 and FIG. 3, a plurality of battery cells 100 may be modularized into one or more battery modules 10. That is, a battery pack 1 according to the present disclosure may include one or more battery modules 10. In addition, a plurality of battery cells 100 may be included as components of one or more battery modules 10. In this case, the plurality of battery cells 100 included in the battery module 10 may be electrically connected to each other.

Furthermore, a plurality of battery modules 10 may be provided inside the pack case 200. That is, the battery pack 1 according to the present disclosure includes multiple battery modules 10, and the plurality of battery cells 100 included in the battery pack 1 may be divided and included in multiple battery modules 10.

In particular, the battery pack 1 according to the present disclosure may include a module case 11. The module case 11 may have an empty space formed therein, and may be configured to store at least some of the plurality of battery cells 100 in the inner space. In particular, the module case 11 may be included in each battery module 10 to group the plurality of battery cells 100 into the plurality of battery modules 10, and may be a boundary that physically confines the inner space of each battery module 10.

In addition, although not shown in the drawing, the battery module 10 may include a bus-bar assembly and/or a module terminal electrically connected to the plurality of battery cells 100 stored therein.

The battery module 10 may include a venting hole H. The venting hole H may be configured to allow gas generated from the battery cells 100 stored inside the module case 11 to be discharged to the outside of the module case 11. Specifically, the venting hole H may be provided in the module case 11 and configured to enable directional venting to a specific direction.

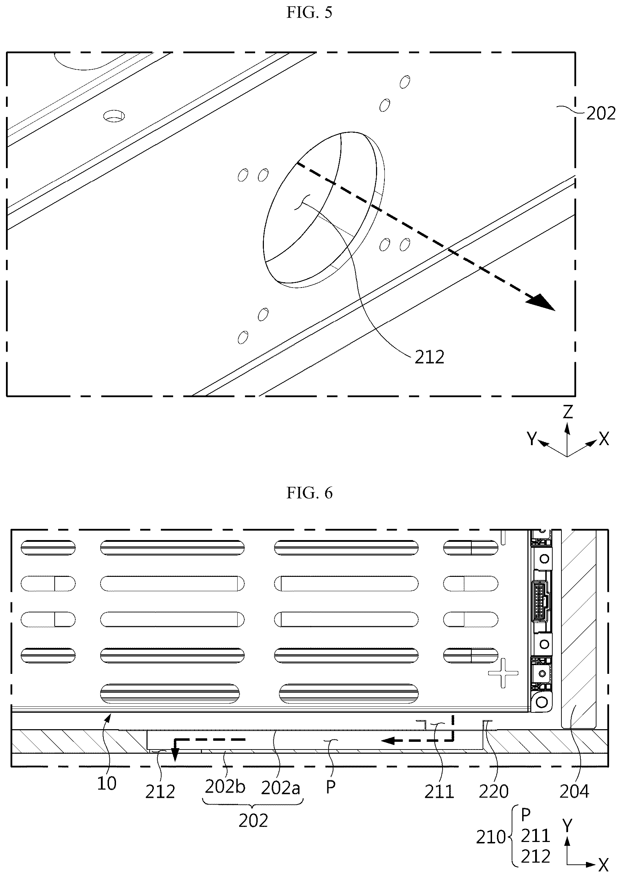

FIG. 5 is an enlarged view of an outer configuration of a battery pack according to an embodiment of the present disclosure, which may be a drawing illustrating, for example, part B in FIG. 2.

The structure of the venting unit 210 will be described in more detail with reference to FIG. 5. The venting unit 210 may have a venting path P. The venting path P may be formed inside one or more of the plurality of frames F. For example, as disclosed in the embodiment illustrated in FIG. 4, the venting path P may be formed in the frame F forming the side of the pack case 200. The venting path P may be formed by extrusion molding of the frame F of the pack case 200. The venting path P may be configured such that venting gas may flow therethrough.

In addition, the venting unit 210 may have an inlet hole 211 and an outlet hole 212. The inlet hole 211 and the outlet hole 212 may be formed together in at least one of the plurality of frames F. The inlet hole 211 may be configured such that the inner space of the pack case 200 is in communication with the venting path P. The inlet hole 211 may be configured on the inner surface of the frame F of the pack case 200.

The outlet hole 212 may be configured to discharge the venting gas flowing into the venting path P through the inlet hole 211 to the outside of the pack case 200. The outlet hole 212 may be provided on the outer surface of the frame F of the pack case 200.

The outlet hole 212 may be configured in the form of a hole connecting the inside and the outside of the pack case 200, as disclosed in the embodiment illustrated in FIG. 5. Alternatively, unlike the above embodiment, the outlet hole 212 may be configured in the form of a venting device that is mountable in the hole of the pack case 200 and operates when venting gas is generated inside the pack case 200.

For example, the outlet hole 212 may have a venting valve or the like, or may be implemented as such a venting valve. In this case, a mounting hole may be formed in the frame F of the pack case 200 so that the venting valve may be mounted in the mounting hole. In the case where the outlet hole 212 is implemented in the form of such a venting valve, the venting valve may be configured to open when the internal pressure of the pack case 200 increases, thereby discharging the venting gas to the outside of the pack case 200.

According to the above-implemented configuration of the present disclosure, the inlet hole 211 and the outlet hole 212 may be configured to be in communication with each other. That is, the inlet hole 211 and the outlet hole 212 may be connected to each other by the venting path P. Accordingly, the venting gas generated in the inner space of the pack case 200 may be introduced into the venting path P through the inlet hole 211 and discharged to the outside of the pack case 200 through the outlet hole 212.

Accordingly, according to the above-implemented configuration of the present disclosure, high-temperature gas or the like generated from the battery cell 100 may be smoothly discharged to the outside of the pack case 200 through the venting unit 210. Therefore, other battery cells 100 may be prevented from being thermally damaged, thereby preventing further chain ignition.

Furthermore, the inlet hole 211 and the outlet hole 212 may be configured to be spaced apart from each other in the horizontal direction. In particular, the inlet hole 211 and the outlet hole 212 may be provided at positions that are staggered in a direction from the inside to the outside of the pack case 200. Accordingly, the path through which the venting gas moves may be bent at least once. That is, the venting gas may be prevented from being directly discharged from the inlet hole 211 to the outlet hole 212.

According to the above-implemented configuration of the present disclosure, the strong tendency of flames or sparks to move straight may be reduced, thereby further suppressing their exposure to the outside of the pack case. Accordingly, flames may be prevented from developing outside the pack case 200.

In addition, according to the above-implemented configuration of the present disclosure, the venting path P may be configured to extend along the extension direction of the frame F of the pack case 200. Accordingly, the discharge path and time of high-temperature venting gas or flames may be increased, so that the venting gas may be cooled and discharged to the outside.

FIG. 6 is a cross-sectional view of a battery pack when viewed from above according to an embodiment of the present disclosure, which may be a cross-sectional view taken, for example, along line I - I' in FIG. 1.

Referring to FIG. 6 in addition to FIG. 2, the frame F of the pack case 200 may include a base frame 201 and a side frame 202.

The base frame 201 may form the lower side of the pack case 200 and may be configured in the shape of a square plate. In addition, the base frame 201 may be configured so that a plurality of battery cells 100 are seated on its upper surface. Furthermore, the base frame 201 may have a flat upper surface so that a plurality of battery cells 100 or module cases 11 may be stably seated thereon.

The side frame 202 may extend upward from respective edges of the base frame 201. The side frame 202 may have a plurality of unit walls so as to surround the plurality of battery cells 100 or battery modules 10. More specifically, the side frame 202 may include a rear wall located at an end of the base frame 201 in the +Y-axis direction, a right wall located at an end in the +X-axis direction, a front wall located at an end in the -Y-axis direction, and a left wall located at an end in the -X-axis direction, thereby forming the sides of the pack case 200.

In this case, the venting unit 210 may be provided on the side of the pack case 200, that is, on the side frame 202. The trap portion 220 may also be provided on the side frame 202.

A plurality of venting unit 210 and a plurality of trap portion 220 may be provided. In particular, the venting unit 210 may be located on at least some of the multiple unit walls of the side frame 202. In addition, the venting unit 210 may be formed separately on each of two or more unit walls, or two or more venting units 210 may be formed on one unit wall. For example, referring to the example illustrated in FIG. 2, a plurality of venting units 210 may be configured respectively on the front wall and the rear wall.

In this case, a trap portion 220 may be installed to correspond to each venting unit 210. For example, as disclosed illustrated in the embodiment in FIG. 2, four venting units 210 may be formed on each of the front wall and the rear wall, and a trap portion 220 may be provided corresponding to each venting unit 210, so that a total of eight trap portions 220 may be included in the battery pack 1. The plurality of venting units 210 and the trap portions 220 may be provided to be symmetrical to each other relative to the center of the side frame 202.

According to the above-implemented configuration of the present disclosure, in the event of an abnormal situation of the battery cell 100, high-temperature gas or the like may be discharged in both directions of the pack case 200, thereby more easily and quickly discharging the gas to the outside of the pack case 200.

Meanwhile, the number or locations of the venting units 210 and the trap portions 220 described in the embodiment in FIG. 2 or the like are merely examples, and may also vary to other values. For example, in FIG. 2, although the venting unit 210 and the trap portion 220 are provided on the Y-axis extension walls of the side frame 202, i.e., on the front wall and the rear wall, they may also be provided on the X-axis extension walls, i.e., the left wall and the right wall.

The side frame 202 may be configured in a double structure, and may have an inner surface 202a and an outer surface 202b. In this case, referring to FIG. 6, the inlet hole 211 may be provided on the inner surface 202a of the side frame 202, and the outlet hole 212 may be provided on the outer surface 202b of the side frame 202. The outlet hole 212 may be provided to be spaced apart from the inlet hole 211 along the extension direction of the side frame 202. Accordingly, the path along which the venting gas moves may be bent at least once. That is, the venting gas may be prevented from being directly discharged from the inlet hole 211 to the outlet hole 212.

According to the above-implemented configuration of the present disclosure, the strong tendency of flames or sparks to move straight may be reduced, thereby further suppressing their exposure to the outside of the pack case. Accordingly, the flame may be prevented from developing outside the pack case 200.

In addition, according to the above-implemented configuration of the present disclosure, the venting path P may be configured to extend along the extension direction of the frame of the pack case 200. Accordingly, the discharge path and time of high-temperature venting gas or flames may be increased, so that the venting gas may be cooled and discharged to the outside.

The frame F of the pack case 200 may further include an upper frame 203. The upper frame 203 may be configured to cover the top of the plurality of battery cells 100. To this end, the upper frame 203 may be coupled to the top of the side frame 202 to form the upper side of the pack case 200.

The upper frame 203 may protect components, such as the battery cells 100, stored therein and prevent venting gas and/or sparks generated from the battery cell 100 from being discharged to the outside of the pack case 200, especially to the top thereof. In particular, the upper frame 203 may guide venting gas and sparks toward the venting unit 210 in the inner space of the pack case 200.

In addition, the frame F of the pack case 200 may further include a cross-beam 204. The cross-beam 204 may be provided to partition a plurality of battery cells 100 or battery modules 10. The cross-beam 204 may be provided between a plurality of battery cells 100 and a side frame 202 where the venting unit 210 is provided. For example, the cross-beam 204 may be configured in the form of a partition extending in the left-right direction, and may be interposed between battery modules 10 disposed adjacently in the front-back direction. In addition, the cross-beam 204 may be configured in the form of a partition extending in the front-back direction, and may be interposed between battery modules 10 disposed adjacently in the left-right direction.

In addition, the cross-beam 204 may be provided to be spaced a predetermined distance apart from the upper frame 203. That is, the cross-beam 204 may be configured to be spaced a predetermined distance apart from the lower surface of the upper frame 203 such that at least a portion of its upper portion is not in contact therewith.

According to this implemented configuration, heat or flame may be prevented from directly flowing between the cell assemblies or battery modules 10 provided in separated storage spaces by the cross-beams 204.

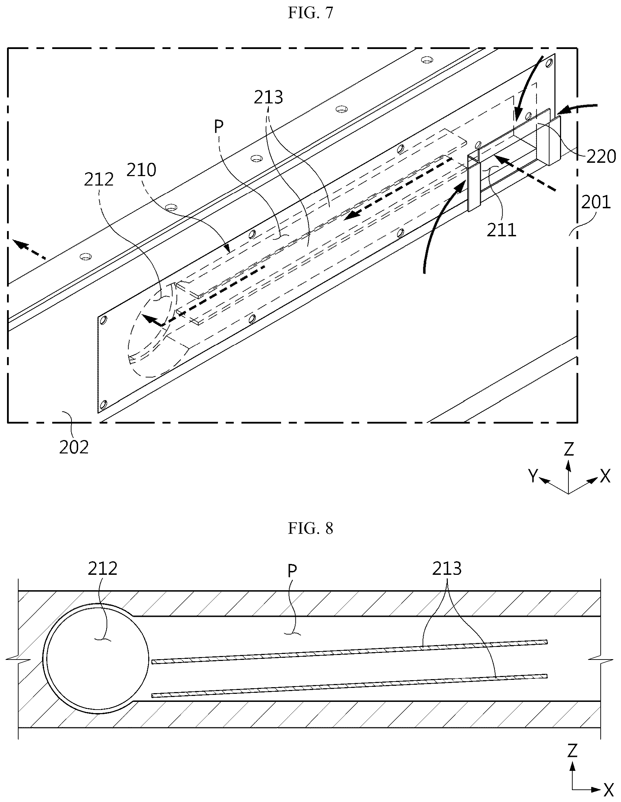

FIG. 7 is a drawing illustrating a guide member included in a battery pack according to an embodiment of the present disclosure.

Referring to FIG. 7, the venting unit 210 may include a guide member 213. The guide member 213 may be provided inside the venting path P. The guide member 213 may be configured to guide the venting gas to the outlet hole 212. The guide member 213 may be configured to extend along the extension direction of the side frame 202. The guide member 213 may be configured in the form of a plate lying horizontally. The guide member 213 may be provided to be parallel to the base frame 201.

In addition, a plurality of guide members 213 may be provided. The plurality of guide members 213 may be provided to be spaced apart from each other along the vertical direction. The venting gas may move in the space between adjacent guide members 213.

According to the above-implemented configuration of the present disclosure, the venting gas or the like inside the venting path P may be guided along the guide member 213 to the outlet hole 212, thereby smoothly discharging to the outside of the battery pack 1. Accordingly, thermal runaway between the battery cells 100 and/or the battery modules 10 may be suppressed or prevented.

FIG. 8 is a drawing illustrating a guide member included in a battery pack according to another embodiment of the present disclosure.

As another embodiment of the present disclosure, a guide member 213 may be configured in an oblique shape. For example, the guide member 213 may be configured to be inclined toward the base frame 201, as disclosed in the embodiment illustrated in FIG. 8. In this case, the guide member 213 may be configured to form an acute angle with the base frame 201.

According to the above-implemented configuration of the present disclosure, the guide member 213 may further increase the movement path of the venting gas inside the venting path P, and may guide the venting gas to move more quickly toward the outlet hole 212.

Meanwhile, unlike the above-described embodiment, the guide member 213 may be configured to be bent at least once, so that the movement path of the venting gas may be further increased.

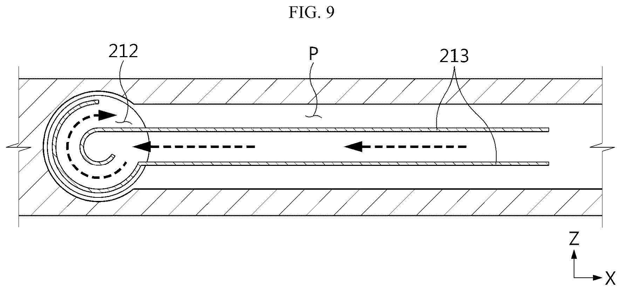

FIG. 9 is a drawing illustrating a guide member included in a battery pack according to another embodiment of the present disclosure.

As another embodiment, a guide member 213 may have a spiral-shaped end. For example, as shown in FIG. 9, the end of the guide member 213 provided to the side where the outlet hole 212 is located may be bent to form a spiral shape. A plurality of guide members 213 may have different spiral shapes. For example, the upper guide member 213 may have an end that is bent downward, and the lower guide member 213 may have an end that is bent upward.

According to the above-implemented configuration of the present disclosure, since the end of the guide member 213 is configured in the spiral shape, the movement path of the venting gas may be further increased on the side where the outlet hole 212 is provided. Accordingly, since the venting gas is not directly discharged from the venting path P to the outlet hole 212, the tendency of the venting gas to move straight may be further reduced.

In addition, according to the above-implemented configuration of the present disclosure, even if the sparks included in the venting gas are not completely blocked by the trap portion 220 on the outside of the venting path P, the sparks may be separated by the spiral path inside the venting path P. As a result, the sparks may be more effectively suppressed from being discharged to the outside of the venting unit 210.

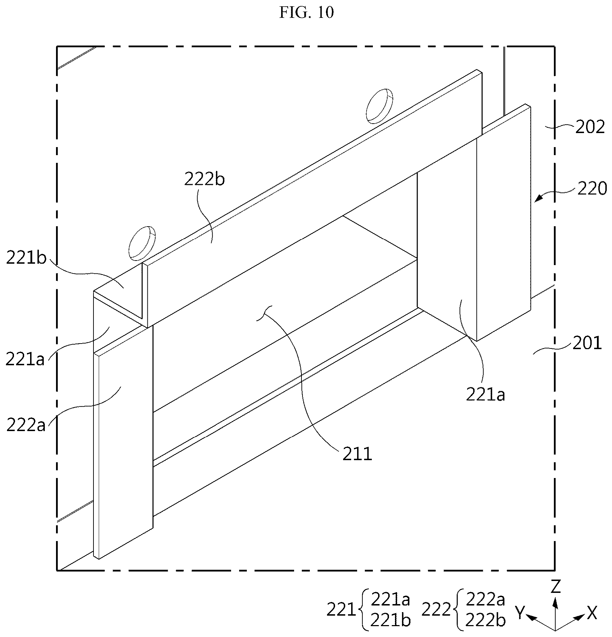

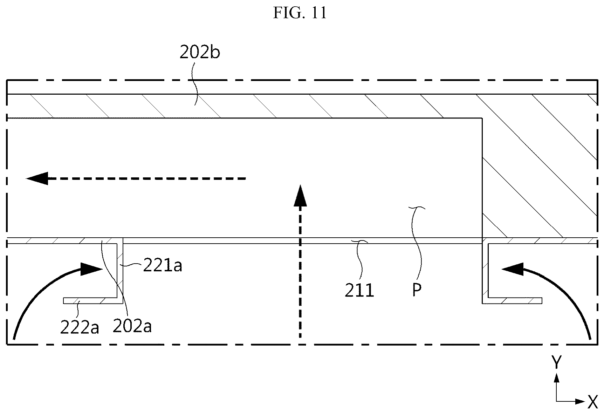

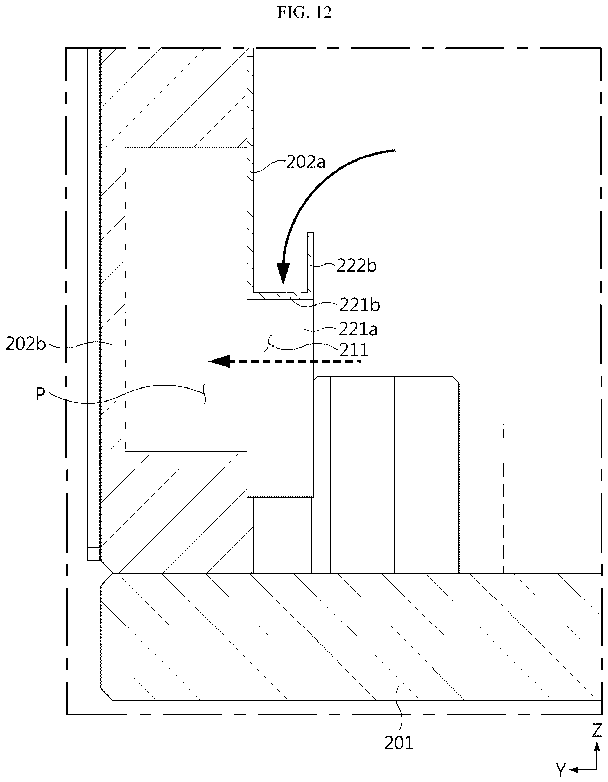

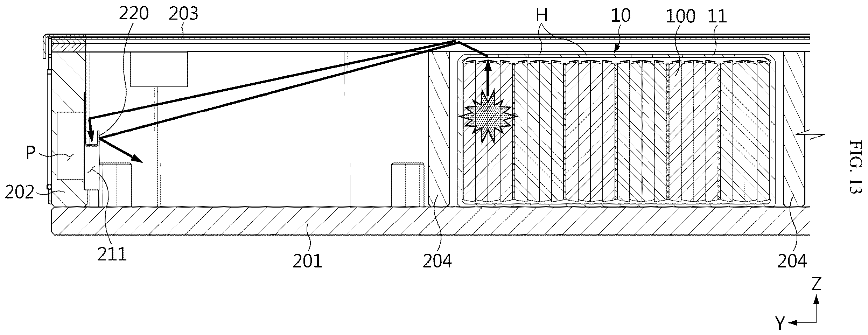

FIG. 10 is a drawing illustrating a structure of a trap portion of a battery pack according to an embodiment of the present disclosure. FIG. 11 is a cross-sectional view of a battery pack when viewed from above according to an embodiment of the present disclosure, and FIG. 12 is a cross-sectional view of a battery pack when viewed from the side according to an embodiment of the present disclosure. In addition, FIG. 13 is a cross-sectional view of a battery pack according to an embodiment of the present disclosure, which may be a cross-sectional view taken, for example, along line II - II' in FIG. 1.

The structure of a trap portion 220 will be explained in more detail with reference to FIGS. 10 to 12. The trap portion 220 may be provided to the side of the inlet hole 211. The trap portion 220 may be provided on the inner surface 202a of the side frame 202. The trap portion 220 may be provided along the perimeter of the inlet hole 211. The trap portion 220 may be configured to protrude from the inlet hole 211 toward the inside of the pack case 200.

According to the above-implemented configuration of the present disclosure, sparks included in the venting gas heading toward the inlet hole 211 may be blocked by the trap portion 220. Accordingly, the sparks may be prevented from being discharged to the outside of the pack case 200 and reacting with oxygen to generate a flame.

More specifically, the trap portion 220 may have a first cover 221. The first cover 221 may be configured to protrude from the perimeter of the inlet hole 211 toward the inner space of the pack case 200. The first cover 221 may be configured in the form of a plate. A plurality of first covers 221 may be provided. The plurality of first covers 221 may be disposed along the perimeter of the inlet hole 211.

In particular, the first cover 221 may be provided on at least one of the upper, left, and right sides of the inlet hole 211. The first cover 221 may have a pair of first side covers 221a provided at the left and right sides of the inlet hole 211. The pair of first side covers 221a may be configured in the form of a plate standing vertically and may be disposed to face each other. The first side covers 221a may be configured to block the sides of the inlet hole 211. The first side covers 221a may be configured to block venting gas heading toward the inlet hole 211 from both left and right sides of the inlet hole 211.

In addition, the first cover 221 may have a first upper cover 221b provided at the upper side of the inlet hole 211. The first upper cover 221b may be configured in the form of a plate lying horizontally. The first upper cover 221b may be configured to block venting gas heading toward the inlet hole 211 from the upper side of the inlet hole 211.

Furthermore, the trap portion 220 may include a second cover 222. The second cover 222 may be provided to extend from at least a portion of the first cover 221. The second cover 222 may be configured to be bent, facing the pack case 200. The second cover 222 may be configured in the form of a plate. Since the second cover 222 is manufactured in a plate shape, the second cover 222 may be configured to face the side frame 202 where the venting unit 210 is formed in parallel. In this case, the second cover 222 may be provided to be spaced a predetermined distance apart from the side frame 202.

According to the above-implemented configuration of the present disclosure, the venting gas may move to the gap between the second cover 222 and the side frame 202, so that the sparks may be trapped in the space between the second cover 222 and the side frame 202 and prevented from heading toward the inlet hole 211. In addition, in this case, the second cover 222 may prevent the sparks that are not blocked by the first cover 221 from heading toward the inlet hole 211.

The second cover 222 may be bent to extend from at least one of the upper, left, and right sides of the first cover 221 toward the side frame 202. For example, the second cover 222 may have second side covers 222a configured to be bent in the left-right direction (X-axis direction) from the front-back direction (Y-axis direction) ends of the first side covers 221a at both sides. The second side cover 222a may be configured in the form of a vertically standing plate so as to face the side frame 202 in parallel.

In particular, as illustrated in FIG. 12 and FIG. 13, the second cover 222 may have a second upper cover 222b configured to be bent upward from the front-back direction (Y-axis direction) end of the first upper cover 221b. The second upper cover 222b may be configured to block the venting gas directed toward the upper portion of the inlet hole 211.

Specifically, the venting gas or sparks discharged from the battery cell 100 may have a high temperature and a strong tendency to move upward. Therefore, as disclosed in the above embodiment, in the case where the first upper cover 221b and the second upper cover 222b are configured to cover the upper portion of the inlet hole 211, the sparks with a strong tendency to move straight may certainly collide with the first upper cover 221b and the second upper cover 222b, thereby more reliably suppressing the sparks from being discharged to the outside.

In addition, the high-temperature venting gas may move toward the inlet hole 211 along the inner surface of the upper frame 203 and may be discharged to the outside. In addition, the gap between the cross-beam 204 and the upper frame 203 may further guide the gas or sparks generated from the battery cell 100 to the upper side in the inner space of the pack case. For example, as indicated by the bold arrows in FIG. 13, the venting gas or sparks may move to the gap between the cross-beam 204 and the upper frame 203 and be reflected on the upper frame 203, or may flow along the lower surface of the upper frame 203 toward the inlet hole 211 to reach the first upper cover 221b located at the upper side of the inlet hole 211. Therefore, the first upper cover 221b may more reliably block the sparks emitted from the battery cell 100.

In addition, according to the above-implemented configuration of the present disclosure, the venting gas may collide with the second upper cover 222b before flowing into the inlet hole 211 so that its flow direction may be bent inward. In addition, during this process, sparks or the like heading toward the inlet hole 211 together with the venting gas may be trapped in the space between the second upper cover 222b and the side frame 202, and may be suppressed from being discharged to the outside.

In this case, as shown in FIG. 3 and FIG. 13, a venting hole H may be provided above the module case 11. According to this implemented configuration, the venting gas and/or sparks may be guided to be discharged to the upper portion of the battery module.

According to the above-implemented configuration of the present disclosure, the venting gas or sparks may be further guided to the upper portion of the pack case 200. Therefore, when venting gas or sparks move toward the inlet hole 211 along the upper inner surface of the pack case 200, the flow of the venting gas or the like may be more reliably blocked by the first upper cover 221b and the second upper cover 222b covering the upper portion of the inlet hole 211. Therefore, the sparks may be more effectively suppressed from being discharged to the outside of the pack case 200.

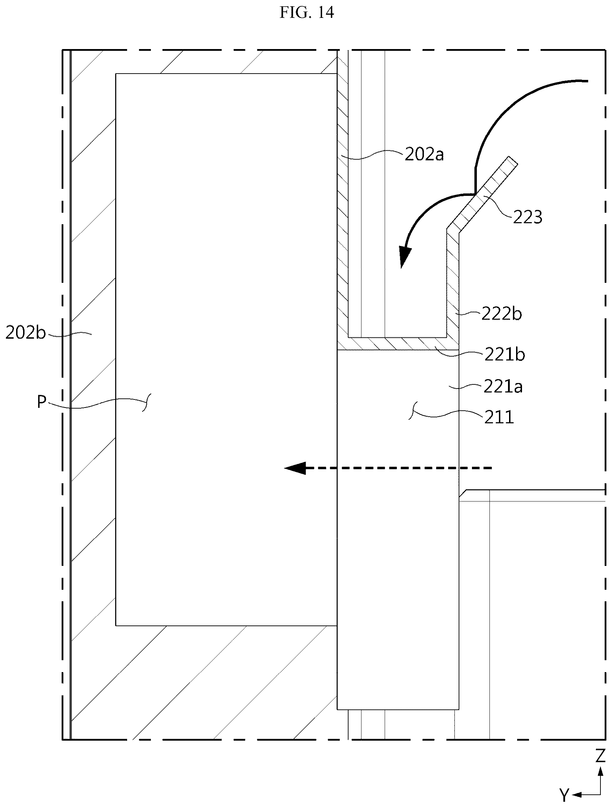

FIG. 14 is a drawing illustrating a structure of a trap portion of a battery pack according to another embodiment of the present disclosure.

Referring to FIG. 14, the trap portion 220 may further include an inner bent portion 223.

The inner bent portion 223 may be configured to extend from at least a portion of the second cover 222. In particular, as disclosed in the embodiment illustrated in FIG. 14, the inner bent portion 223 may extend from the second upper cover 222b to be bent. The inner bent portion 223 may extend from the upper end of the second upper cover 222b in a direction away from the side frame 202, that is, toward the inside of the pack case 200. Here, the inner bent portion 223 may be configured in a diagonal shape. That is, the inner bent portion 223 may be configured to form an obtuse angle with the second upper cover 222b.

According to the above-implemented configuration of the present disclosure, the inner bent portion 223 may be configured to block the sparks from moving over the second cover 222 toward the inlet hole 211. This makes it possible to more effectively block sparks or flames from being discharged to the outside of the pack case 200.

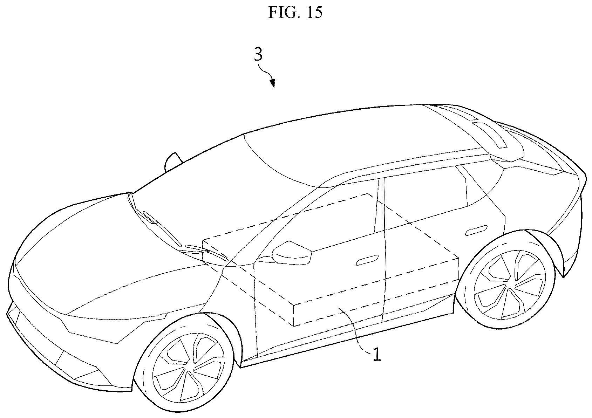

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to the above-described embodiments. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may operate using power supplied from a battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells; and
a pack case formed of a plurality of frames and configured to store the plurality of battery cells in its inner space,
wherein the pack case comprises a venting unit configured to discharge venting gas generated from the battery cell to an outside, and a trap portion protruding inward from the venting unit and configured to suppress sparks included in the venting gas from moving to the venting unit.

2. The battery pack according to claim 1,
wherein the venting unit
has a venting path formed inside one or more of the plurality of frames and configured such that the venting gas flows therethrough.

3. The battery pack according to claim 2,
wherein the venting unit has
an inlet hole configured to communicate the inner space of the pack case with the venting path, and an outlet hole configured to discharge venting gas flowing into the venting path through the inlet hole to the outside of the pack case.

4. The battery pack according to claim 3,
wherein the inlet hole and the outlet hole are provided at positions that are staggered in a direction from an inside to an outside of the pack case.

5. The battery pack according to claim 3,
wherein the pack case comprises
a base frame on which the plurality of battery cells are seated, and
a side frame extending upward from the base frame and having the venting unit provided therein.

6. The battery pack according to claim 5,
wherein the inlet hole is provided on an inner surface of the side frame,
wherein the outlet hole is provided on an outer surface of the side frame, and
wherein the outlet hole is configured to be spaced apart from the inlet hole in an extension direction of the side frame.

7. The battery pack according to claim 3,
wherein the venting unit comprises
a guide member provided inside the venting path and configured to guide the venting gas to the outlet hole.

8. The battery pack according to claim 3,
wherein the trap portion is provided to a side of the inlet hole.

9. The battery pack according to claim 8,
wherein the trap portion comprises
a first cover configured to protrude from a perimeter of the inlet hole toward the inner space.

10. The battery pack according to claim 9,
wherein the first cover is provided on at least one of upper, left, and right sides of the inlet hole.

11. The battery pack according to claim 9,
wherein the trap portion comprises
a second cover extending from the first cover and being bent to face the pack case.

12. The battery pack according to claim 1,
wherein the second cover is provided at an upper side of the inlet hole.

13. The battery pack according to claim 1,
further including a module case configured to store the plurality of battery cells in a storage space and having a venting hole formed on an upper side to communicate with the storage space.

14. A vehicle comprising a battery pack according to any one of claims 1 to 13.
